# EUROPEAN PATENT SPECIFICATION

(11) **EP 2 651 123 B1**
(45) Date of publication and mention of the grant of the patent: **01.02.2017**
(21) Application number: 12290126.7
(22) Date of filing: 10.04.2012
(51) Int. Cl.: H04N 5/765, H04N 21/2747, H04N 21/433, H04N 21/845

(54) **Personal network video recording device and method for operation of a personal network video recording device.**
Persönliche Netzwerk-Videoaufzeichnungsvorrichtung und Verfahren zum Betrieb einer persönlichen Netzwerk-Videoaufzeichnungsvorrichtung.
Dispositif d'enregistrement vidéo personnel en réseau et procédé de fonctionnement d'un dispositif d'enregistrement vidéo personnel en réseau.

(43) Date of publication of application: 16.10.2013
(73) Proprietor: ALCATEL LUCENT, 92100 Boulogne-Billancourt (FR)
(72) Inventor: Weik, Hartmut, 70195 Stuttgart (DE); Schoen, Sebastian, 70439 Stuttgart (DE)
(74) Representative: Wetzel, Emmanuelle

(56) References cited:
- US-A1- 2002 046 404
- US-A1- 2005 065 890
- US-A1- 2010 169 977
- US-A1- 2012 084 454

## Description

The present invention relates to the area of personal video recording of video streams.

Different technologies are available for providing a video stream to a user. Simple video streaming technologies utilize streaming protocols such RTP with RTSP. Improved streaming technologies are usually based on HTTP and designed to work efficiently over large distributed HTTP networks such as the Internet. E.g. adaptive bitrate streaming is based on streaming over http. In adaptive bitrate streaming, a user's bandwidth/bitrate and CPU capacity are detected in real time and the quality of a video stream is adjusted accordingly. Adaptive bitrate streaming is based on the use of an encoder which can encode a single source video stream at multiple bit rates. The player client switches between streaming the different encodings depending on available resources. Adaptive bitrate streaming is implemented e.g. within Adobe Dynamic Streaming, Apple HTTP Adaptive Streaming, Microsoft Smooth Streaming or Octoshape Multi-BitRate.

Furthermore, dynamic adaptive streaming over http (DASH) is a new standard for video streaming. DASH is a multimedia streaming technology where a multimedia file is partitioned into one or more segments and delivered to a client using HTTP. A media presentation description (MPD), also referred to manifest file, describes segment information (timing, URL, media characteristics such as video resolution and bit rates). DASH is audio/video codec agnostic. One or more representations (i.e., versions at different resolutions or bit rates) of multimedia files are typically available, and selection can be made based on network conditions, device capabilities and user preferences, enabling adaptive bitrate streaming. For example when using DASH, the video stream is separated in individual segments, which can be addressed via their URL. DASH is based on Adaptive HTTP streaming (AHS) and on HTTP Adaptive Streaming (HAS), and is also related to Adobe Systems's HTTP Dynamic Streaming, Apple Inc.'s HTTP Live Streaming (HLS) and Microsoft's Smooth Streaming.

Personal video recording (PVR) refers to the recording of such video streams by a user. Video recording is usually performed locally on a PVR device, which can be any kind of data processing device having a data storage, a TV for displaying video streams having a data storage, a dedicated receiver for receiving and storing the video stream, or others. Frequently, the device used for PVR is also used for playback, either on a built-in output device or via an external output device, e.g. a common TV or a laptop computer.

Drawback of PVR is the amount of required data storage space. Depending on the quality of the received video stream, available data storage can rapidly be exhausted. The same refers to PVR-services, which are offered as online services. A user selects a stream to be recorded and specifies a starting time and an end time, which is used by the PVR-service to provide a personal recording of the video stream. Nevertheless, data storage of a user is also limited, since every PVR-recording is done personally.

US 2010/169977 A1 discloses systems, methods, and apparatus for tagging a segment of media content.

US 2005/065890 A1 discloses implementations that generate an encrypted content data structure package and/or data tree.

A document US 2012/0084454 A1 describes apparatuses and methods used in a media streaming system in which at least two representations of a media content item are available are provided.

It is therefore an object of the present invention to provide means for simple and efficient personal video recording of video streams. In particular, it is an object of the present invention to enable personal video recording of video streams with reduced data storage requirements for a user.

This object is achieved by the independent claims. Advantageous embodiments are given in the dependent claims.

The invention relates to a method for operation of a network personal video recording device according to claim 1.

The invention further relates to a method for operating a system according to claim 7.

The present invention also provides a network personal video recording device according to claim 12 and a system according to claim 13.

Basic idea of the invention is to provide personal video recording (PVR) as a network service based on the identification of the segments of the video stream. This enables simple implementation of PVR with a distributed system comprising at least one PVR client and a network PVR device. The stream is stored in the network PVR device, so that a user does not have to care about available storage space. By means of the same identification, a user can access the stored segments and request them from the network PVR device. Preferably HTTP is used for transferring the video stream to the PVR client. More preferably, the methods are based on the use of adaptive streaming over HTTP, further preferred on dynamic adaptive streaming over HTTP (DASH). The video stream can be any kind of stream including a live video stream or an on-demand video stream, also referring to VOD. The video stream can be provided via the data network directly from a streaming server, or from any kind of caching device. Preferably, the data network comprises an internet connection and the caching device comprises a content delivery network (CDN). The segments of the video stream are also referred to as chunks. In current implementations chunks have a typical duration of 1 to 10 seconds, Nevertheless, the length of the chunks is not relevant for PVR. The step of performing the personal video recording refers to the definition of a start and stop time of the PVR. This can be implemented by means of a time controlled, automated start and stop, or a manual start and stop of a user currently watching the video stream, or a mixture thereof. The identification is suitable for performing an individual access to the chunks. The identification can be unique within the video stream, or a unique identifier which enables direct access to the respective segment. Preferably, the identifier is a URL. Recording and playback of the video stream are essentially independent and can even be performed using different devices and with any delay in between. Also, the step of providing at least one segment of the personal video recording to the personal video recording client can be performed more than once. In general, the individual method steps can be performed in different sequences and the methods are not limited to the sequences given above. Preferably, the identification of the at least one segment to be recorded is provided individually for each segment received at the personal video recording client. Accordingly, the network personal video recording device can immediately request the corresponding segment and store it upon reception of the identification. Alternatively, the identification is provided independently from the reception of the segment to be recorded at the personal video recording client. Further preferred, the identification comprises authorization information for receiving the video stream. Accordingly, when streaming is restricted to certain users, the network personal video recording device can use this authorization for requesting the at least one segment of the video stream to be recorded.

According to a preferred embodiment, in both methods authorization and/or encryption is applied to the identification of the at least one received segment and the at least one segment of the video stream when being stored and/or when being provided to the personal video recording client. Accordingly, the personal video recording client and the network personal video recording device perform authorization and/or encryption and decryption, respectively. Furthermore, access control via entitlement can be implemented. Also a restriction of time for the replay can be implemented, so that the personal video recording is available only for a certain time at the network personal video recording device.

According to a preferred embodiment the PVR client itself is a network device, which enables video streaming to a user device. Accordingly, the personal video recording can be fully provided as a network service. The user does not have to run any device at his side for receiving the video stream when creating personal video recording.

According to a preferred embodiment the method comprises the additional step of storing the identification of the at least one received segment to be recorded in an ID storage of the personal video recording client, and the step of requesting the at least one segment of the personal video recording from the network personal video recording device according to its stored identification comprises reading the stored identification from the ID storage. The identification of recorded segments is stored directly in the PVR-client, so that it can be easily used for playback. Requesting the identification from a different device is not required. Preferably, the identifications of a personal video recording are commonly stored, e.g. in a PVR file. According to a preferred embodiment the step of providing the identification of the at least one received segment to be recorded to a network personal video recording device comprises providing the identification of at least two received segments to be recorded together to the network personal video recording device. This reduces the number of transmissions for transfer of the identifications of the segments to be recorded from the VPR client to the network PVR device. The network PVR device can request the segments to be recorded at any time independent from the reception of the segments to be recorded at the PVR client. Preferably, the identifications are immediately transmitted to the network PVR device, which immediately requests the respective segments.

According to a preferred embodiment the step of providing the identification of the at least one received segment to be recorded to a network personal video recording device comprises providing the identification of all received segments to be recorded together to the network personal video recording device. Hence, only one transmission from the PVR client to the network PVR device contains all identifications of the segments to be recorded. Preferably, the identifications are transferred to the network PVR device as a chronological list of segments. The network PVR device can request the segments to be recorded at any time independent from the reception of the segments to be recorded at the PVR client.

According to a preferred embodiment the segments of the video stream are provided in at least two different representations, and the step of storing an identification of at least one received segment to be recorded comprises storing the received representation of the received segments to be recorded. The representations of a chunk refer to the same content provided differently, in particular with different bitrates. This frequently corresponds to a particular video resolution of the video stream. When a selection of the representation of the video stream occurs, it is assumed that only this representation is relevant for the PVR client, e.g. due to limitations at the PVR client like a maximum resolution to be reproduced, or due to network limitations. The selection of the representation can be a permanent selection, e.g. a user selection or a PVR client configuration, or a dynamic adaptation of the video stream, e.g. due to current conditions of the data network. Preferably, the identification integrally comprises the representation.

According to a preferred embodiment the segments of the video stream are provided in at least two different representations, and the step of receiving an identification of at least one segment to be recorded from a personal video recording client comprises receiving the representation of the at least one segment to be recorded, and the step of requesting the at least one segment of the video stream to be recorded according to its identification comprises requesting the received representation of the at least one segment. Accordingly, the network PVR device requests exactly the representation of each segment to be recorded as received at the PVR client.

According to a preferred embodiment the step of storing the at least one segment to be recorded to a data storage comprises comparing the identification of the at least one segment to be recorded with the identification of segments available in the data storage and linking the segments available in the data storage to the personal video recording. When multiple PVR clients perform a PVR of the same video stream, the segments of the video stream which are common in all recordings are only stored once in the network PVR device. This leads to a significant reduction of data storage required for all users of the network PVR device. Nevertheless, the recording is still personal, since recorded segments are uniquely identified by the identifier. Preferably, the identification comprises a representation of the segment to be recorded. Even when the same video stream is recorded by different PVR clients, the representation of the video stream at the different PVR clients can be different. Accordingly, it has to be verified that the specified representation is stored by the network PVR device. In a further preferred embodiment, the specified representation is not requested if a similar representation is already available at the network PVR device. Accordingly, the PVR client is provided with a different representation of the requested segment when playback is done. This further reduces required data storage at the network PVR device.

According to a preferred embodiment the step of storing the at least one segment to be recorded to a data storage comprises storing the at least one segment in at least two representations, and the step of providing at least one segment of the personal video recording to the personal video recording client comprises adaptive streaming of the at least one segment of the personal video recording to the personal video recording client. One representation typically corresponds to the representation received by the PVR client, whereas other representations are different. Typically, the other representations have different bitrates as explained above, which can be lower or higher.

The personal video recording client can request different representations of each segment. The representation is preferably changeable for each segment.

According to a preferred embodiment the step of storing the at least one segment in at least two representations comprises comparing the identification of each representation of the at least one segment to be recorded and the identification and the representation of segments available in the data storage and linking the representation of segments available in the data storage to the personal video recording. Only representations of segments, which are not available at the network PVR device, are stored to reduce memory consumption of the data storage.

According to a preferred embodiment the step of storing the at least one segment in at least two representations comprises storing representations with a bitrate smaller than the bitrate of the representation of the segment as indicated by the received representation of the at least one segment to be recorded. Assuming that the bitrate received at the PVR client corresponds to a maximum bitrate, e.g. due to hardware limitations of the PVR client or limitations of the data network as explained above, further storage can be saved by avoiding to store representations unsuitable for the PVR client. Preferably, representations of the segments with a higher bitrate, which are available at the network PVR device, are blocked to the PVR client.

According to a preferred embodiment the step of requesting the at least one segment of the personal video recording from the network personal video recording device comprises performing adaptive streaming of the at least one segment of the personal video recording from the network personal video recording device. From the representations available at the network PVR device, the PVR client can permanently or dynamically choose a suitable representation, which improves the user experience.

According to a preferred embodiment the method comprises the additional step of storing the identification of the at least one segment to be recorded in the data storage. Hence, the PVR client does not need to store the identification locally. It can retrieve the identification from the network PVR device. Preferably, the identifications of a personal video recording are commonly stored, e.g. in a PVR file. It is merely required by the PVR client to request the identifications from the network PVR device. It is also possible to store the identification in the data storage and additionally in the ID storage of the PVR client.

Some embodiments of methods and apparatus in accordance with the present invention are now described, by way of example only, and with reference to the accompanying drawings, in which:
- Fig. 1: is a schematic diagram showing the principle behavior of the algorithm for dynamic adaptive streaming over http with a PVR client and a network PVR device,
- Fig. 2: is a schematic diagram showing the principle relation between data segments and MPD data in dynamic adaptive streaming over HTTP as shown in Fig. 1,

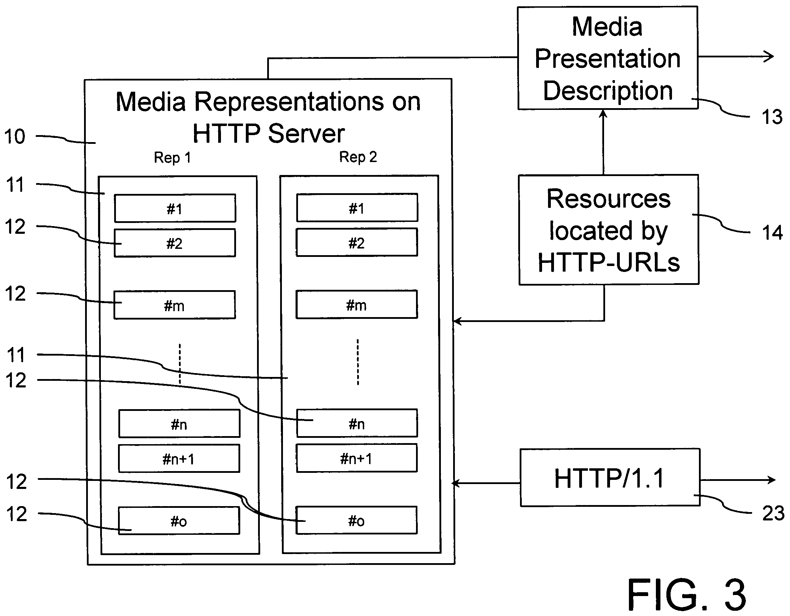

- Fig. 3: is a schematic diagram showing the principle media representations on a HTTP server in dynamic adaptive streaming over http as shown in Fig. 1,
- Fig. 4: is a schematic diagram showing the DASH data model used in dynamic adaptive streaming over http as shown in Fig. 1 and a PVR-file, and
- Fig. 5: is a schematic diagram showing the principle of personal video recording based on dynamic adaptive streaming over HTTP as shown in Fig. 1.

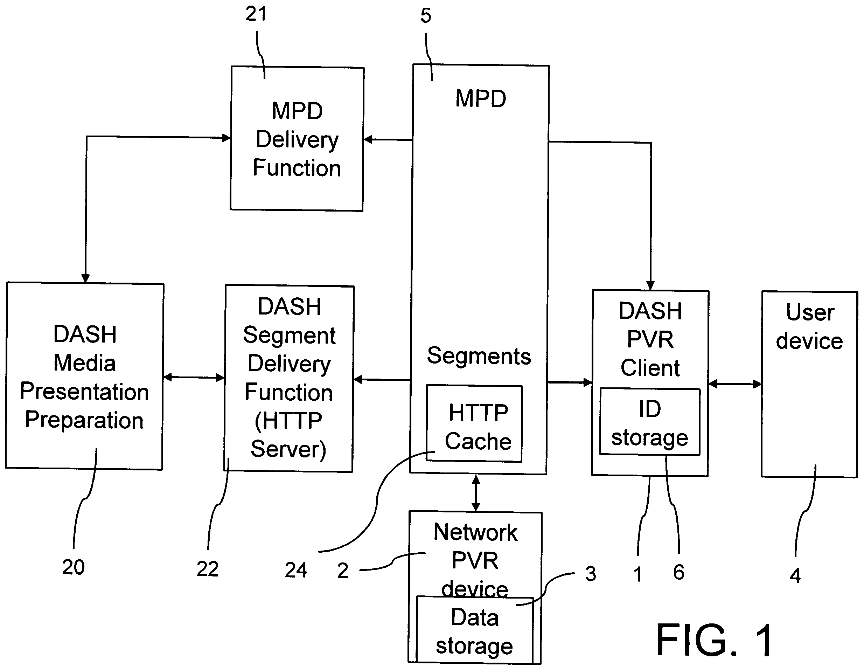

Fig. 1 shows the principle behavior of dynamic adaptive streaming over http (DASH) with a personal video recording client 1 and a network personal video recording device 2 for performing personal video recording (PVR) on a data storage 3 of the network PVR device 2. The PVR client 1 itself is a network device, which enables video streaming to a user device 4, and which is controlled from the user device 4. PVR client 1 and network PVR device 2 are connected via a data network 5, which comprises in this embodiment the internet. The PVR client 1 further comprises an ID storage 6, as further explained below.

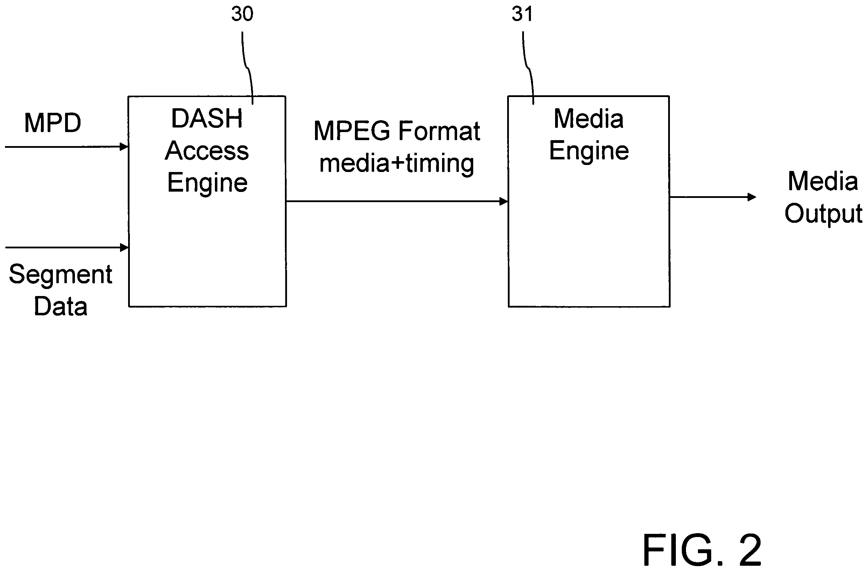

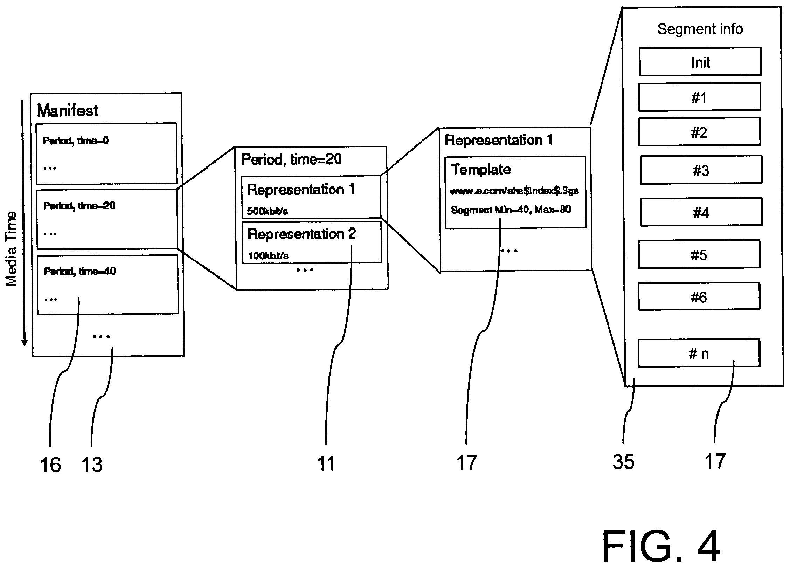

DASH is suitable providing a video stream 10, as schematically shown in Fig. 2. The video stream 10 in this embodiment is a live video stream or an on-demand video stream, and is shown in Fig. 2 by way of example only with two representations 11, which correspond to the same video content provided at different video resolutions and with different bitrates. Each representation 11 comprises individual segments 12, also referred to as chunks, each covering the same time duration. Accordingly, each segment 12 of the two representations 11 can be exchanged with a segment 12 of another representation 11. A media presentation description (MPD) 13, also referred to as manifest file, comprises information about the video stream 10, i.e. available representations 11 and segments 12. The manifest file 13 is shown in detail in Fig. 4. It comprises for each time period 16 a list of available representations 11. Each list contains identifications 17 of the respective segment 12 including its URL 14, which enables addressing and accessing each segment 12 independently within the video stream 10. The PVR client 1 provides authorization information for accessing the video stream 10.

As shown in Fig. 1, the video stream 10 is provided in the DASH media presentation preparation 20. A MPD delivery function 21 provides the manifest file 13 to the PVR client 1 via the data network 5. The PVR client 1 requests the segments 12 based on the manifest file 13, which are provided from a HTTP server 22, which implements a DASH segment delivery function. The segments 12 are transported from the HTTP server 22 via the data network 5 using HTTP as transport protocol 23. Furthermore, the data network 5 comprises a content delivery network (CDN) 24 as caching device.

As shown in respect to Fig. 2, the PVR client 1 comprises a DASH access engine 30 for receiving the manifest file 13 and the segments 12. The DASH access engine 30 provides the video stream 10 as in MPEG format containing media and timing information to a media engine 31, which generates a media output of the video stream 10.

In operation, the PVR client 1 requests a video stream 10 in segments 12 from the HTTP server 22. A user watches the video stream 10 at the user device 4, whereby the video stream 10 is provided to the user device 4 via the PVR client 1. The user initiates a personal recording of the video stream 10 manually using the user device 4 to provide a start time and an end time for the recording to the PVR client 1. In alternative embodiments, the user instructs the PVR client 1 to receive the video stream 10 with time control to automatically start and stop the personal video recording.

The PVR client 1 stores the identification 17 the segments 12 to be recorded in a PVR file 35, as shown in Fig. 4. The PVR-file 35 in this embodiment contains the identification 17 of all received segments 12 of the respective representations 11 to be recorded as a chronological list. In this embodiment, the PVR-file 35 is stored in the ID storage 6 of the personal video recording client 1.

In this embodiment, the PVR client 1 provides the PVR-file 35 to the network PVR device 2, after all segments 12 to be recorded have been received at the PVR client 1. The PVR-file 35 further comprises the authorization information for receiving the video stream 10. In an alternative embodiment, a PVR-file 35 comprises only the identification 17 of one segment 12 to be recorded. Accordingly, multiple PVR-files 35 are generated.

The PVR-file 35 is provided to the network PVR device 2. The PVR device 2 requests the segments 12 of the respective representations 11 of the video stream 10 to be recorded according to the identifications 17 in the PVR-file 35 from the HTTP-server 22 or the CDN 24. Additionally, the PVR device 2 also request segments 12 of representations 11 with a bitrate lower than the bitrate of the representation 11 received at the PVR client 1. The network PVR device 2 uses the authorization information for requesting the segments 12 of the video stream 10 to be recorded.

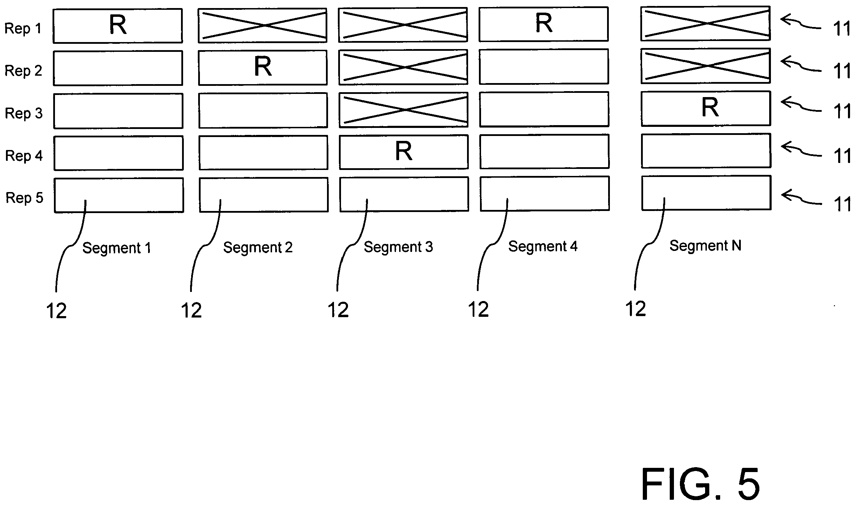

As shown in Fig. 5, the DASH implementation enables switching between different representations 11 dynamically. As indicated by the "R" in the segments 12 of the different representations 11, at each time one representation 11 is received individually and independently. According to the present embodiment, segments 12 of representations 11 having a higher bitrate than those of the representation received at the PVR client 1 are not requested. All other segments 12 are requested.

The requested segments 12 are stored in the data storage 3. Accordingly, the identification 17 of each representation 11 of each segment 12 to be recorded is compared to the identification 17 of segments 12 of representations 11 available in the data storage 3. Available segments 12 are not stored again but linked to the personal video recording. Only representations 11 of segments 12, which are not already available at the network PVR device 2, are stored. In a modified embodiment, it is first verified based on the identification 17 of the segments 12 of the different representations 11, if these segments 12 are already available in the data storage 3. Accordingly, they are only requested if not available.

For playback of the personal recording of the video stream 10, the user uses the user device 4 to request via the PVR client 1 the segments 12 of the personal video recording from the network PVR device 2. The request uses the PVR-file 35 from the ID storage 6, which contains the identifications 17 of the segments 12 formerly received at the PVR client 1. Upon reception of this request, the network PVR device 2 provides the personal video recording to the PVR client 1 as a dynamic adaptive video stream 10. Accordingly, the PVR client 1 can request different representations 11 of each segment 12 as required. The PVR client 1 provides the PVR to the user device 4. The PVR client 1 chooses dynamically a representation 11 of each segment 12 as available at the network PVR device 2.

PVR and playback of the recorded video stream 10 are independent and can be performed using different devices. Playback can also be performed more than once.

In an alternative embodiment, the network PVR device 2 stores the PVR-file 35 in the data storage 5. Accordingly, it is not required to keep a local copy of the PVR-file 35 in the ID storage 6 of the PVR client 1. The PVR client 1 requests the PVR-file 35 from the network PVR device 2 before starting the playback of the personal video recording. In a further alternative embodiment, a copy of the PVR-file 35 is kept in the ID storage 6 of the PVR client 1.

In this embodiment, authorization and encryption are applied to the PVR-file 35 and the segments 12 of the video stream 10 when being stored and provided to the PVR client 1. Accordingly, the PVR client 1 and the network PVR device 2 perform authorization and/or encryption and decryption. Furthermore, access control via entitlement is implemented.

The present inventions may be embodied in other specific apparatus. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A method for operation of a network personal video recording device (2) for personal video recording of a video stream (10), wherein the video stream (10) is provided via a data network (5) and in segments (12), which are independently accessible within the video stream (10), comprising the steps of
receiving an identification (17) of at least one segment (12) to be recorded from a personal video recording client (1),
requesting the at least one segment (12) of the video stream (10) to be recorded according to its identification (17) from a content delivery service (22,24),
storing the at least one segment (12) to be recorded to a data storage (3),
for playback, providing at least one segment (12) of the video stream (10) to the personal video recording client (1) upon reception of its identification (17) from the personal video recording client (1),
**characterized in that**
the step of storing the at least one segment (12) to be recorded to a data storage (3) comprises comparing the identification (17) of the at least one segment (12) to be recorded with the identification (17) of segments (12) available in the data storage (3), such that segments (12) already available in the data storage (3) are not stored again but linked to the personal video recording.

2. The method according to claim 1, wherein the segments (12) of the video stream (10) are provided in at least two different representations (11), and the step of receiving an identification (17) of at least one segment (12) to be recorded from a personal video recording client (1) comprises receiving the representation (11) of the at least one segment (12) to be recorded, and the step of requesting the at least one segment (12) of the video stream (10) to be recorded according to its identification (17) comprises requesting the received representation (11) of the at least one segment (11).

3. The method according to claim 2, wherein the step of storing the at least one segment (12) to be recorded to a data storage (3) comprises storing the at least one segment (12) in at least two representations (11), and the step of providing at least one segment (12) of the personal video recording to the personal video recording client (1) comprises adaptive streaming of the at least one segment (12) of the personal video recording to the personal video recording client (1).

4. The method according to claim 3, wherein the step of storing the at least one segment (12) in at least two representations (11) comprises comparing the identification (17) of each representation (11) of the at least one segment (12) to be recorded and the identification (17) and the representation (11) of segments available in the data storage (3) and linking the representation (11) of segments (12) available in the data storage (3) to the personal video recording.

5. The method according to claim 3, wherein the step of storing the at least one segment (12) in at least two representations (11) comprises storing representations (11) with a bitrate smaller than the bitrate of the representation (11) of the segment (12) as indicated by the received representation (11) of the at least one segment (12) to be recorded.

6. The method according to claim 1, comprising the additional step of storing the identification (17) of the at least one segment (12) to be recorded in the data storage (3).

7. A method for operating a system comprising a network personal video recording device (2) and a personal video recording client (1) for personal video recording of a video stream (10), wherein said network personal video recording device (2) is operated according to the method of at least one of the preceding claims, and wherein operating said personal video recording client (1) comprises the following steps: said personal video recording client (1) receiving the video stream (10), said personal video recording client (1) performing a personal video recording of the video stream (10), said personal video recording client (1) storing an identification (17) of at least one received segment (12) to be recorded, said personal video recording client (1) providing the identification (17) of the at least one received segment (12) to be recorded to said network personal video recording device (2) for recording the respective segments (12) of the video stream (10) in the network personal video recording device (2), and, for playback, said personal video recording client (1) requesting the at least one segment (12) of the video stream (10) from the network personal video recording device (2) according to its stored identification (17).

8. The method according to claim 7, comprising the additional step of said personal video recording client (1) storing the identification (17) of the at least one received segment (12) to be recorded in an ID storage (6) of the personal video recording client (1), and the step of requesting the at least one segment (12) of the personal video recording from the network personal video recording device (2) according to its stored identification (17) comprises reading the stored identification (17) from the ID storage (6).

9. The method according to claim 7, wherein the step of providing the identification (17) of the at least one received segment (12) to be recorded to said network personal video recording device (2) comprises providing the identification (17) of all received segments (12) to be recorded together to the network personal video recording device (2).

10. The method according to claim 7, wherein the segments (12) of the video stream (10) are provided in at least two different representations (11), and the step of storing an identification (17) of at least one received segment (12) to be recorded comprises storing the received representation (11) of the received segments (12) to be recorded.

11. The method according to claim 7, wherein the step of requesting the at least one segment (12) of the personal video recording from the network personal video recording device (2) comprises performing adaptive streaming of the at least one segment (12) of the personal video recording from the network personal video recording device (2).

12. A network personal video recording device (2) for performing the method according to any of claims 1 to 6.

13. A system comprising a network personal video recording device (2) according to claim 12 and a personal video recording client (1) for personal video recording of a video stream (10), wherein the system is configured to perform the steps of at least one of the claims 7 to 11.

## Patentansprüche

1. Verfahren zum Betrieb einer persönlichen Netzwerk-Videoaufzeichnungsvorrichtung (2) für die persönliche Videoaufzeichnung eines Videostreams (10), wobei der Videostream (10) über ein Datennetzwerk (5) und in Segmenten (12) zur Verfügung gestellt wird, die innerhalb des Videostreams (10) unabhängig voneinander zugänglich sind, die folgenden Schritte umfassend:
den Empfang einer Identifikation (17) mindestens eines von einem persönlichen Videoaufzeichnungs-Client (1) aufzuzeichnenden Segments (12),
das Anfordern des mindestens einen Segments (12) des Videostreams (10), das gemäß seiner Identifikation (17) aufzuzeichnen ist, von einem Inhaltsbereitstellungsdienst (22, 24),
das Speichern des mindestens einen aufzuzeichnenden Segments (12) in einem Datenspeicher (3),
zum Abspielen das Bereitstellen mindestens eines Segments (12) des Videostreams (10) für den persönlichen Videoaufzeichnungs-Client (1) auf den Empfang seiner Identifikation (17) von dem persönlichen Videoaufzeichnungs-Client (1) hin,
**dadurch gekennzeichnet, dass**
der Schritt des Speicherns des mindestens einen Segments (12), das in einem Datenspeicher (3) aufzuzeichnen ist, den Vergleich der Identifikation (17) des mindestens einen aufzuzeichnenden Segments (12) mit der Identifikation (17) von in dem Datenspeicher (3) verfügbaren Segmenten (12) umfasst, dergestalt, dass bereits im Datenspeicher (3) verfügbare Segmente (12) nicht erneut gespeichert sondern mit der persönlichen Videoaufzeichnung verlinkt werden.

2. Das Verfahren nach Anspruch 1, wobei die Segmente (12) des Videostreams (10) in mindestens zwei verschiedenen Repräsentationen (11) zur Verfügung gestellt werden und der Schritt des Empfangens einer Identifikation (17) des mindestens einen aufzuzeichnenden Segments (12) von einem persönlichen Videoaufzeichnungs-Client (1) den Empfang der Repräsentation (11) des mindestens einen aufzuzeichnenden Segments (12) umfasst, und wobei der Schritt des Anforderns des mindestens einen Segments (12) des Videostreams (10), das gemäß seiner Identifikation (17) aufzuzeichnen ist, das Anfordern der empfangenen Repräsentation (11) des mindestens einen Segments (12) umfasst.

3. Das Verfahren nach Anspruch 2, wobei der Schritt des Speicherns des mindestens einen Segments (12), das in einem Datenspeicher (3) aufzuzeichnen ist, das Speichern des mindestens einen Segments (12) in mindestens zwei Repräsentationen (11) umfasst und der Schritt des Bereitstellens mindestens eines Segments (12) der persönlichen Videoaufzeichnung für den persönlichen Videoaufzeichnungs-Client (1) das adaptive Streaming des mindestens einen Segments (12) der persönlichen Videoaufzeichnung an den persönlichen Videoaufzeichnungs-Client (1) umfasst.

4. Das Verfahren nach Anspruch 3, wobei der Schritt des Speicherns des mindestens einen Segments (12) in mindestens zwei Repräsentationen (11) umfasst, die Identifikation (17) jeder Repräsentation (11) des mindestens einen aufzuzeichnenden Segments (12) mit der Identifikation (17) und der Repräsentation (11) von in dem Datenspeicher (3) verfügbaren Segmenten zu vergleichen und die Repräsentation (11) von im Datenspeicher (3) verfügbaren Segmenten (12) mit der persönlichen Videoaufzeichnung zu verlinken.

5. Das Verfahren nach Anspruch 3, wobei der Schritt des Speicherns des mindestens einen Segments (12) in mindestens zwei Repräsentationen (11) umfasst, die Repräsentationen (11) mit einer Bitrate zu speichern, die kleiner ist als diejenige Bitrate der Repräsentationen (11) des Segments (12), die von der empfangenen Repräsentation (11) des mindestens einen aufzuzeichnenden Segments (12) angegeben wird.

6. Das Verfahren nach Anspruch 1, weiterhin den Schritt des Speicherns der Identifikation (17) des mindestens einen, in dem Datenspeicher (3) zu speichernden Segments (12) umfassend.

7. Verfahren für den Betrieb eines Systems, welches eine persönliche Netzwerk-Videoaufzeichnungsvorrichtung (2) und einen persönlichen Videoaufzeichnungs-Client (1) für die persönliche Videoaufzeichnung eines Videostreams (10) umfasst, wobei besagte persönliche Netzwerk-Videoaufzeichnungsvorrichtung (2) gemäß dem Verfahren aus mindestens einem der vorgenannten Ansprüche betrieben wird und wobei das Betreiben besagten persönlichen Videoaufzeichnungs-Clients (1) die folgenden Schritte umfasst: den Empfang des Videostreams (10) durch besagten persönlichen Videoaufzeichnungs-Client (1), das Ausführen einer persönlichen Videoaufzeichnung des Videostreams (10) durch besagten persönlichen Videoaufzeichnungs-Client (1), das Speichern einer Identifikation (17) mindestens eines der empfangenen, aufzuzeichnenden Segmente (12) durch besagten persönlichen Videoaufzeichnungs-Client (1), das Bereitstellen der Identifikation (17) des mindestens einen empfangenen, in besagter persönlicher Netzwerk-Videoaufzeichnungsvorrichtung (2) aufzuzeichnenden Segments (12) zum Zweck des Aufzeichnens der entsprechenden Segmente (12) des Videostreams (10) in der persönlichen Netzwerk-Videoaufzeichnungsvorrichtung (2), und zum Abspielen weiterhin den Schritt des Anforderns des mindestens einen Segments (12) des Videostreams (10) von der persönlichen Netzwerk-Videoaufzeichnungsvorrichtung (2) durch den persönlichen Videoaufzeichnungs-Client (1) gemäß seiner gespeicherten Identifikation (17).

8. Das Verfahren nach Anspruch 7, weiterhin den zusätzlichen Schritt umfassend, dass besagter persönlicher Videoaufzeichnungs-Client (1) die Identifikation (17) des mindestens einen empfangenen, aufzuzeichnenden Segments (12) in einem ID-Speicher (6) des persönlichen Videoaufzeichnungs-Client (1) speichert, und wobei der Schritt des Abrufens des mindestens einen Segments (12) der persönlichen Videoaufzeichnung von der persönlichen Netzwerk-Videoaufzeichnungsvorrichtung (2) gemäß seiner gespeicherten Identifikation (17) weiterhin das Lesen der gespeicherten Identifikation (17) aus dem ID-Speicher (6) umfasst.

9. Das Verfahren nach Anspruch 7, wobei der Schritt des Bereitstellens der Identifikation (17) des mindestens einen empfangenen, aufzuzeichnenden Segments (12) für die besagte, persönliche Netzwerk-Videoaufzeichnungsvorrichtung (2) umfasst, die Identifikation (17) aller empfangenen und aufzuzeichnenden Segmente (12) der persönlichen Netzwerk-Videoaufzeichnungsvorrichtung (2) gesammelt bereitzustellen.

10. Das Verfahren nach Anspruch 7, wobei die Segmente (12) des Videostreams (10) in mindestens zwei verschiedenen Repräsentationen (11) bereitgestellt werden und der Schritt des Speicherns einer Identifikation (17) mindestens eines empfangenen, aufzuzeichnenden Segments (12) das Speichern der empfangenen Repräsentation (11) der empfangenen, aufzuzeichnenden Segmente (12) umfasst.

11. Das Verfahren nach Anspruch 7, wobei der Schritt des Abrufens des mindestens einen Segments (12) der persönlichen Videoaufzeichnung von der persönlichen Netzwerk-Videoaufzeichnungsvorrichtung (2) umfasst, ein adaptives Streaming des mindestens einen Segments (12) der persönlichen Videoaufzeichnung von der persönlichen Netzwerk-Videoaufzeichnungsvorrichtung (2) auszuführen.

12. Persönliche Netzwerk-Videoaufzeichnungsvorrichtung (2) zur Ausführung eines Verfahrens nach einem jeglichen der Ansprüche 1 bis 6.

13. Ein System, eine persönliche Netzwerk-Videoaufzeichnungsvorrichtung (2) nach Anspruch 12 und einen persönlichen Videoaufzeichnungs-Client (1) für die persönliche Videoaufzeichnung eines Videostreams (10) umfassend, wobei das System dafür konfiguriert ist, um die Schritte nach mindestens einem der Ansprüche 7 bis 11 auszuführen.

## Revendications

1. Procédé pour l'exploitation d'un dispositif d'enregistrement vidéo personnel de réseau (2) pour l'enregistrement vidéo personnel d'un flux vidéo (10), le flux vidéo (10) étant fourni via un réseau de données (5) et dans des segments (12), qui sont accessibles indépendamment à l'intérieur du flux vidéo (10), comprenant les étapes suivantes
recevoir une identification (17) d'au moins un segment (12) devant être enregistré en provenance d'un client d'enregistrement vidéo personnel (1),
demander le au moins un segment (12) du flux vidéo (10) devant être enregistré selon son identification (17) à un service de diffusion de contenu (22, 24),
stocker le au moins un segment (12) devant être enregistré dans un stockage de données (3),
pour la lecture, fournir au moins un segment (12) du flux vidéo (10) au client d'enregistrement vidéo personnel (1) lors de la réception de son identification (17) en provenance du client d'enregistrement vidéo personnel (1),
**caractérisé en ce que**
l'étape de stockage du au moins un segment (12) devant être enregistré dans un stockage de données (3) comprend la comparaison de l'identification (17) du au moins un segment (12) devant être enregistré avec l'identification (17) de segments (12) disponibles dans le stockage de données (3), de sorte que des segments (12) déjà disponibles dans le stockage de données (3) ne soient pas stockés à nouveau mais liés à l'enregistrement vidéo personnel.

2. Procédé selon la revendication 1, dans lequel les segments (12) du flux vidéo (10) sont fournis dans au moins deux représentations différentes (11), et l'étape de réception d'une identification (17) d'au moins un segment (12) devant être enregistré en provenance d'un client d'enregistrement vidéo personnel (1) comprend la réception de la représentation (11) du au moins un segment (12) devant être enregistré, et l'étape de demande du au moins un segment (12) du flux vidéo (10) devant être enregistré selon son identification (17) comprend la demande de la représentation reçue (11) du au moins un segment (12).

3. Procédé selon la revendication 2, dans lequel l'étape de stockage du au moins un segment (12) devant être enregistré dans un stockage de données (3) comprend le stockage du au moins un segment (12) dans au moins deux représentations (11), et l'étape de fourniture d'au moins un segment (12) de l'enregistrement vidéo personnel au client d'enregistrement vidéo personnel (1) comprend la diffusion en flux adaptatif du au moins un segment (12) de l'enregistrement vidéo personnel au client d'enregistrement vidéo personnel (1).

4. Procédé selon la revendication 3, dans lequel l'étape de stockage du au moins un segment (12) dans au moins deux représentations (11) comprend la comparaison de l'identification (17) de chaque représentation (11) du au moins un segment (12) devant être enregistré et de l'identification (17) et la représentation (11) de segments disponibles dans le stockage de données (3) et la liaison de la représentation (11) de segments (12) disponibles dans le stockage de données (3) à l'enregistrement vidéo personnel.

5. Procédé selon la revendication 3, dans lequel l'étape de stockage du au moins un segment (12) dans au moins deux représentations (11) comprend le stockage de représentations (11) avec un débit binaire inférieur au débit binaire de la représentation (11) du segment (12) comme indiqué par la représentation reçue (11) du au moins un segment (12) devant être enregistré.

6. Procédé selon la revendication 1, comprenant l'étape supplémentaire de stockage de l'identification (17) du au moins un segment (12) devant être enregistré dans le stockage de données (3).

7. Procédé pour exploiter un système comprenant un dispositif d'enregistrement vidéo personnel de réseau (2) et un client d'enregistrement vidéo personnel (1) pour l'enregistrement vidéo personnel d'un flux vidéo (10), ledit dispositif d'enregistrement vidéo personnel de réseau (2) étant exploité selon le procédé d'au moins l'une des revendications précédentes, et l'exploitation dudit client d'enregistrement vidéo personnel (1) comprenant les étapes suivantes : ledit client d'enregistrement vidéo personnel (1) recevant le flux vidéo (10), ledit client d'enregistrement vidéo personnel (1) effectuant un enregistrement vidéo personnel du flux vidéo (10), ledit client d'enregistrement vidéo personnel (1) stockant une identification (17) d'au moins un segment reçu (12) devant être enregistré, ledit client d'enregistrement vidéo personnel (1) fournissant l'identification (17) du au moins un segment reçu (12) devant être enregistré audit dispositif d'enregistrement vidéo personnel de réseau (2) pour enregistrer les segments respectifs (12) du flux vidéo (10) dans le dispositif d'enregistrement vidéo personnel de réseau (2), et, pour la lecture, ledit client d'enregistrement vidéo personnel (1) demandant le au moins un segment (12) du flux vidéo (10) au dispositif d'enregistrement vidéo personnel de réseau (2) selon son identification stockée (17).

8. Procédé selon la revendication 7, comprenant l'étape supplémentaire dudit client d'enregistrement vidéo personnel (1) stockant l'identification (17) du au moins un segment reçu (12) devant être enregistré dans un stockage d'ID (6) du client d'enregistrement vidéo personnel (1), et l'étape de demande du au moins un segment (12) de l'enregistrement vidéo personnel au dispositif d'enregistrement vidéo personnel de réseau (2) selon son identification stockée (17) comprend la lecture de l'identification stockée (17) à partir du stockage d'ID (6).

9. Procédé selon la revendication 7, dans lequel l'étape de fourniture de l'identification (17) du au moins un segment reçu (12) devant être enregistré audit dispositif d'enregistrement vidéo personnel de réseau (2) comprend la fourniture de l'identification (17) de tous les segments reçus (12) devant être enregistrés ensemble au dispositif d'enregistrement vidéo personnel de réseau (2).

10. Procédé selon la revendication 7, dans lequel les segments (12) du flux vidéo (10) sont fournis dans au moins deux représentations différentes (11), et l'étape de stockage d'une identification (17) d'au moins un segment reçu (12) devant être enregistré comprend le stockage de la représentation reçue (11) des segments reçus (12) devant être enregistrés.

11. Procédé selon la revendication 7, dans lequel l'étape de demande du au moins un segment (12) de l'enregistrement vidéo personnel au dispositif d'enregistrement vidéo personnel de réseau (2) comprend l'exécution de diffusion en flux adaptatif du au moins un segment (12) de l'enregistrement vidéo personnel depuis le dispositif d'enregistrement vidéo personnel de réseau (2).

12. Dispositif d'enregistrement vidéo personnel de réseau (2) pour exécuter le procédé selon l'une quelconque des revendications 1 à 6.

13. Système comprenant un dispositif d'enregistrement vidéo personnel de réseau (2) selon la revendication 12 et un client d'enregistrement vidéo personnel (1) pour l'enregistrement vidéo personnel d'un flux vidéo (10), le système étant configuré pour exécuter les étapes d'au moins une des revendications 7 à 11.
